# EUROPEAN PATENT APPLICATION

(11) **EP 4 220 505 A1**
(43) Date of publication of application: **02.08.2023**
(21) Application number: 20955048.2
(22) Date of filing: 11.12.2020
(51) Int. Cl.: G06Q 10/06

(54) **SYSTEM FOR DESIGNING TRAIN OPERATION ORGANIZATION PLAN FOR RAIL TRANSIT**

(30) Priority: 24.09.2020 CN 202011017521
(71) Applicant: Traffic Control Technology Co., Ltd., Beijing 100070 (CN)
(72) Inventor: HUANG, Dinghui, Beijing 100070 (CN); SUN, Junguo, Beijing 100070 (CN); XIAO, Xiao, Beijing 100070 (CN)
(74) Representative: Micheli & Cie SA
(86) International application number: PCT/CN2020/135610
(87) International publication number: WO 2022/062206

(57) **Abstract**

A system for designing a train operation organization scheme for rail transit, the system comprising: a database (110) used to store route data, passenger flow data and model data required to design a train operation organization scheme; a scheme generation module (120) used to design the train operation organization scheme on the basis of the route data, the passenger flow data and the model data and according to preset train operation organization scheme design rules, and to acquire evaluation indexes of the train operation organization scheme; and an operation module (130) enabling a user to operate the system so as to select the route data, the passenger flow data, the model data, and the preset train operation organization scheme design rules, and used to store and/or display the train operation organization scheme and the evaluation indexes. The system for designing a train operation organization scheme achieves automatic design of train operation organization schemes, thereby significantly improving design efficiency.

## Description

### CROSS-REFERENCE TO RELATED APPLICATION

The present disclosure claims priority to Chinese patent disclosure No. 202011017521.X filed on September 24, 2020, entitled "System for Designing Train Operation Organization Plan for Rail Transit", which is hereby incorporated by reference in its entirety.

### FIELD

The present disclosure relates to the field of rail transit, in particular to a system for designing an organization scheme of train operation for rail transit.

### BACKGROUND

With the acceleration of urbanization, the scale of new urban rail transit network is developing rapidly. For example, according to the data released by the Ministry of Transport of China, as of December 2019, urban rail transit goes into operation in a total of 40 cities in Chinese mainland, with an operating mileage of more than 6,730.27 kilometers, which has quadrupled in the past 10 years.

For the urban rail transit, pre-feasibility study design, involving civil engineering, electromechanical, transportation, signal and other disciplines, needs to be carried out for each line before specific design. The organization scheme of train operation is the main basis for the subsequent train operation management.

Nowadays, a plan/scheme of organization of train operation is generally determined based on manual calculation and evaluation, which not only consumes a lot of resources, but also has low design efficiency.

Therefore, it is of great significance to provide a system for designing an organization scheme of train operation for rail transit to achieve an automatic design for the organization scheme of train operation, thereby improving the design efficiency.

### SUMMARY

In view of the defects in the related art, an embodiment of the present disclosure provides a system for designing an organization scheme of train operation for rail transit, including:
a database for storing line data, passenger flow data and model data used for designing the organization scheme of train operation;
a scheme generating device, used to design, according to a preset design rule for the organization scheme of train operation, the organization scheme of train operation based on the line data, the passenger flow data, and the model data, and obtain an evaluation index for the organization scheme of train operation; and
an operating device, used to operate the system by a user to select the line data, the passenger flow data, the model data and the preset design rule for the organization scheme of train operation, and store and/or display the organization scheme of train operation and the evaluation indexes.

In an embodiment, the organization scheme of train operation includes: a vehicle marshalling scheme, a transportation organization scheme, a train operation routing schemes, and a siding design.

In an embodiment, the preset design rule for the organization scheme of train operation includes:
a design rule for the vehicle marshalling scheme, a design rule for the transportation organization scheme, a design rule for the train operation routing schemes, and a design rule for the siding design.

In an embodiment, the design rule for the vehicle marshalling scheme includes: selecting a type of a vehicle based on vehicle operation and vehicle depot resource sharing rules according to the passenger flow data and determining marshalling number based on the transportation capacity requirements of a line;
the design rule for the transportation organization scheme includes: determining stations for running express trains and the number of express and slow train pairs based on the function orientation of the line, a target value of time and the passenger flow data;
the design rule for the train operation routing schemes includes: constructing train operation routing configuration schemes with different time gradients based on the passenger flow data and a routing design rule; and
the design rule for the siding design includes: constructing a siding scheme according to siding requirements derived from the train operation routing schemes.

In an embodiment, the evaluation indexes include:
designed transportation capacity, designed transportation capacity reserve and a vehicle purchase cost for the vehicle marshalling scheme;
railway carrying capacity and transportation capacity, an investment amount of a project and a travel time of express and slow trains for the transportation organization scheme;
a peak hour full load rate, a vehicle purchase cost, a routing coverage and designed traffic capacity for the train operation routing schemes; and
operational flexibility and fault handling flexibility for the siding design.

In an embodiment, the system further includes a display device;
the display device is used to display the organization scheme of train operation and the evaluation indexes, and perform weighted rating on the organization scheme of train operation.

In an embodiment, the perform weighted rating on the organization scheme of train operation includes:
assigning a first weight value to the evaluation indexes of the vehicle marshalling scheme, assigning a second weight value to the evaluation indexes of the transportation organization scheme, assigning a third weight value to the evaluation indexes of the train operation routing schemes, and assigning a fourth weight value to the evaluation indexes of the siding design; and
performing weighted rating on the organization scheme of train operation based on the first weight value, the second weight value, the third weight value and the fourth weight value.

In an embodiment, a sum of the first weight value, the second weight value, the third weight value and the fourth weight value is 1.

In an embodiment, the system further includes a scheme library;
the scheme library is used to store the organization scheme of train operation and the evaluation indexes.

In an embodiment, the line data includes the number of stations, the number of turnouts, the number of signal machines, a technical speed, and an operating mileage of the line;
the passenger flow data includes peak hour section passenger volume and daily passenger volume of the line; and
the model data includes a calculation model of the evaluation indexes.

In the system for designing an organization scheme of train operation for rail transit according to the embodiment of the present disclosure, the scheme generating device can automatically generate the organization scheme of train operation based on the data and the design rules for the organization scheme of train operation selected by the user through the operating device, thus compared with the related art, the organization scheme of train operation can be automatically designed and the efficiency of the design is significantly improved.

### BRIEF DESCRIPTION OF DRAWINGS

In order to illustrate solutions in embodiments of the present disclosure or the related art, the following briefly introduces drawings that need to be used in the description of the embodiments of the present disclosure or the related art. The described drawings in the following are some embodiments of the present disclosure, and those of ordinary skill in the art can obtain other drawings based on these described drawings without creative work.
FIG. 1 is a schematic structural diagram of a system for designing an organization scheme of train operation for rail transit according to an embodiment of the present disclosure;
FIG. 2 is a schematic diagram of a relationship between various sub-schemes in the organization scheme of train operation according to an embodiment of the present disclosure;
FIG. 3 is a schematic structural diagram of a system for designing an organization scheme of train operation for rail transit according to an embodiment of the present disclosure;
FIG. 4 is a schematic diagram of a relationship between various components in a system for designing an organization scheme of train operation for rail transit according to an embodiment of the present disclosure; and
FIG. 5 is a schematic structural diagram of an electronic device according to an embodiment of the present disclosure.

### DETAILED DESCRIPTION OF THE EMBODIMENTS

In order to make the objectives, solutions and advantages of the embodiments of the present disclosure more clear, the solutions in the embodiments of the present disclosure are clearly described in the following with reference to the accompanying drawings in the embodiments of the present disclosure. These embodiments are a part of the embodiments of the present disclosure, and not all of the embodiments. All other embodiments obtained by a person of ordinary skill in the art based on the embodiments of the present disclosure without creative work are within the scope of the present disclosure.

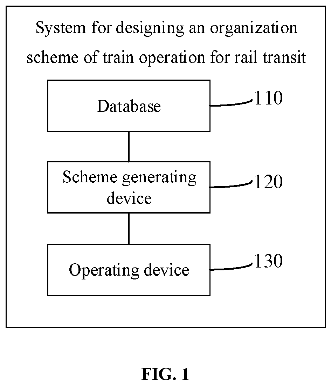

FIG. 1 is a schematic structural diagram of a system for designing an organization scheme of train operation for rail transit according to an embodiment of the present disclosure. With reference to FIG. 1, an embodiment of the present disclosure provides a system for designing an organization scheme of train operation for rail transit, including: a database 110, a scheme generating device 120 and an operating device 130.

The database 110 is used to store line data, passenger flow data and model data used for designing the organization scheme of train operation;
the scheme generating device 120 is used to design, according to a preset design rule for the organization scheme of train operation, the organization scheme of train operation based on the line data, the passenger flow data, and the model data, and obtain evaluation indexes for the organization scheme of train operation; and
the operating device 130 is used to operate the system by a user to select the line data, the passenger flow data, the model data and the preset design rule for the organization scheme of train operation, and store and/or display the organization scheme of train operation and the evaluation indexes.

In an embodiment, the database 110 is used to store various line data, passenger flow data and model data used for generating the organization scheme of train operation to provide data support for the system. These data can come from already designed organization scheme of train operation, or can come from pre-collected data associated with existing lines, or can come from predicted data of related lines to be designed which are obtained based on various algorithms.

In an embodiment, the line data can include the number of stations, the number of turnouts, the number of signal machines, a technical speed, and an operating mileage of the line;
the passenger flow data includes peak hour section passenger volume and daily passenger volume of the line; and
the model data includes a calculation model for the evaluation indexes.

In the system for designing an organization scheme of train operation for rail transit according to the embodiment of the present disclosure, since the scheme generating device 120 can automatically generate the organization scheme of train operation based on the data and the design rules for the organization scheme of train operation selected by the user through the operating device 130, compared with the related art, the organization scheme of train operation can be automatically designed and the efficiency of the design is significantly improved.

In an embodiment, the organization scheme of train operation includes the following sub-schemes:
a vehicle marshalling scheme: including a vehicle type, marshalling number and other information;
a transportation organization scheme: including an organization method for express and slow trains, in which the slow trains stop at each station, and the express trains take jump stops on certain platforms;
train operation routing schemes: including configuration schemes for different routes and the number of running train pairs and other information; and
siding design: mainly for the station auxiliary lines other than a main line, used as avoidance lines, turn-back lines, etc.

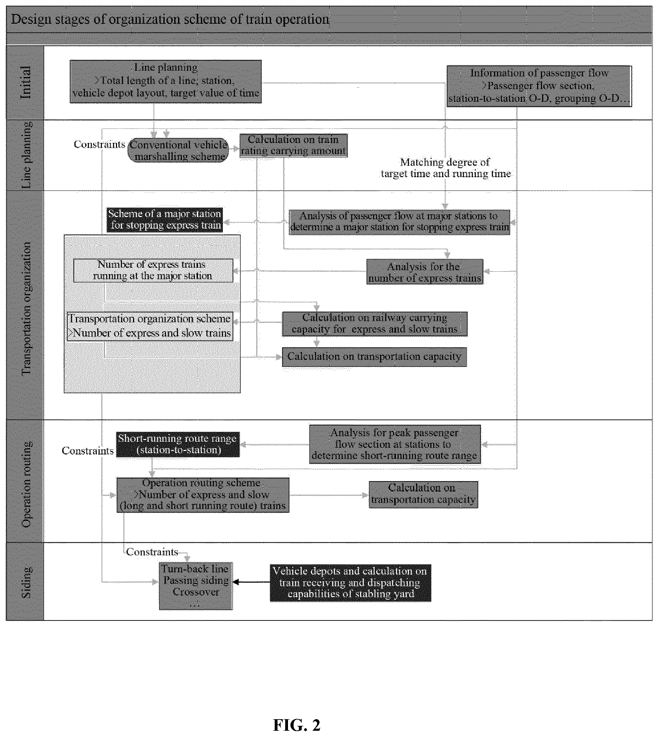

In an embodiment, the above sub-schemes may be associated with each other. First, all sub-schemes are carried out under the constraints of line planning and information of passenger flows. The transportation organization scheme and the train operation routing schemes are calculated based on a rating carrying amount of a train under the marshalling scheme. The siding design is carried out based on calculation results of other sub-schemes, and also uses design rules of vehicle depots and train receiving and dispatching capabilities of stabling yard, etc. in the line planning. A relationship between various sub-schemes is shown in FIG. 2

In the system for designing an organization scheme of train operation for rail transit according to the embodiment of the present disclosure, since the organization scheme of train operation includes the vehicle marshalling scheme, the transportation organization scheme, the train operation routing schemes and the siding design, all aspects of the train operation have been fully considered in the organization scheme of train operation, which can fully guarantee the smooth operation of the train.

In an embodiment, the preset design rule for the organization scheme of train operation can include:
a design rule for the vehicle marshalling scheme: selecting a type of a vehicle based on vehicle operation and vehicle depot resource sharing rules according to the passenger flow data and determining marshalling number based on the transportation capacity requirements of a line;
a design rule for the transportation organization scheme: determining stations for running express trains and the number of express and slow train pairs based on the function orientation of the line, a target value of time and the passenger flow data; and
a design rule for the train operation routing schemes: constructing train operation routing configuration schemes with different time gradients based on the passenger flow data and a routing design rule.

It should be noted that reasonable and feasible train routings can make full use of line resources of the rail transit and reduce transportation costs. Therefore, by using a good train operation routing scheme, the transportation capacity and the utilization efficiency of vehicles can be improved without reducing the service level.

A design rule for the siding design: constructing a siding scheme according to siding requirements derived from the train operation routing schemes.

It should be noted that the transportation organization scheme and the train operation routing schemes would generate some requirements for the line. For example, in a case that the express and slow trains run at the same time, it may be necessary to set up siding line at the overpass station to facilitate the overpassing of the express train. Therefore, the siding scheme should be constructed in combination with these requirements.

In the system for designing an organization scheme of train operation for rail transit according to the embodiment of the present disclosure, since the design rules of each sub-scheme are based on the core aspects of sub-scheme design, the sub-schemes designed according to the design rules of the sub-scheme can fully satisfy the requirements of all aspects of train operation.

In an embodiment, the evaluation indexes may include:
designed transportation capacity, designed transportation capacity reserve and a vehicle purchase cost for the vehicle marshalling scheme;
railway carrying capacity and traffic capacity, an investment amount of a project and a travel time of express and slow trains for the transportation organization scheme;
a peak hour full load rate, a vehicle purchase cost, a routing coverage and designed traffic capacity for the train operation routing schemes; and
operational flexibility (whether the turn-back point meets the post-routing operation) and fault handling flexibility (after the occurrence of fault, whether there are enough passing sidings for fault processing) for the siding design.

It can be understood that the evaluation indexes may be obtained by calculating using the model data stored in the database 110.

In the system for designing an organization scheme of train operation for rail transit according to the embodiment of the present disclosure, since the evaluation on each sub-scheme is carried out based on the core aspects of sub-scheme design, the finally obtained evaluation indexes can significantly reflect the performance of each sub-scheme and provide an important reference for designers.

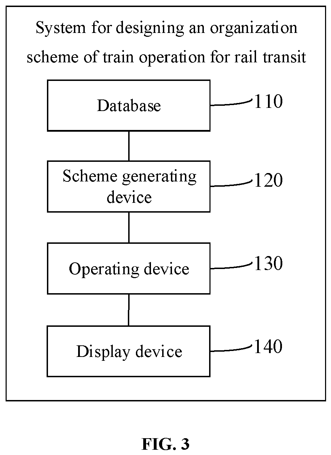

Further, as shown in FIG. 3, in an embodiment, the system for designing an organization scheme of train operation for rail transit further includes a display device 140.

The display device 140 is used to display the organization scheme of train operation and the evaluation indexes, and perform weighted rating on the organization scheme of train operation.

In an embodiment, the display device 140 includes a scheme selection sub-device and a display sub-device for selected scheme. The scheme selection sub-device is used to display an optional sub-scheme and evaluation indexes of the optional sub-scheme. The display sub-device for selected scheme is used to display the selected sub-scheme and evaluation indexes of the selected sub-scheme and perform weighted rating on the organization scheme of train operation

In an embodiment, the perform weighted rating on the organization scheme of train operation includes:
assign a first weight value to the evaluation indexes of the vehicle marshalling scheme, assign a second weight value to the evaluation indexes of the transportation organization scheme, assign a third weight value to the evaluation indexes of the train operation routing schemes, and assign a fourth weight value to the evaluation indexes of the siding design; and
perform weighted rating on the organization scheme of train operation based on the first weight value, the second weight value, the third weight value and the fourth weight value.

It can be understood that the importance of different sub-schemes can be reflected by assigning different weight values for the evaluation indexes of each sub-scheme of the organization scheme of train operation. For example, the first weight value can be larger than the second weight value, and the third weight value can be larger than the fourth weight value.

The sizes of the first to fourth weight values may be adjusted according to actual needs, which is not limited in the embodiment of the present disclosure.

After the weight values are assigned, the result of the weighted rating can be obtained by a sum of a product of the first weight value and evaluation indexes of the vehicle marshalling scheme, a product of the second weight value and evaluation indexes of the transportation organization scheme, a product of the third weight value and evaluation indexes of the train operation routing schemes and a product of the fourth weight value and evaluation indexes of the siding design.

In an embodiment, a sum of the first weight value, the second weight value, the third weight value and the fourth weight value can be 1.

By assigning weight values to the evaluation indexes of each sub-scheme of the organization scheme of train operation and obtaining weighted rating results based on the weight values, the performance of the designed organization scheme of train operation can be quantified and a more intuitive reference is provided for designers.

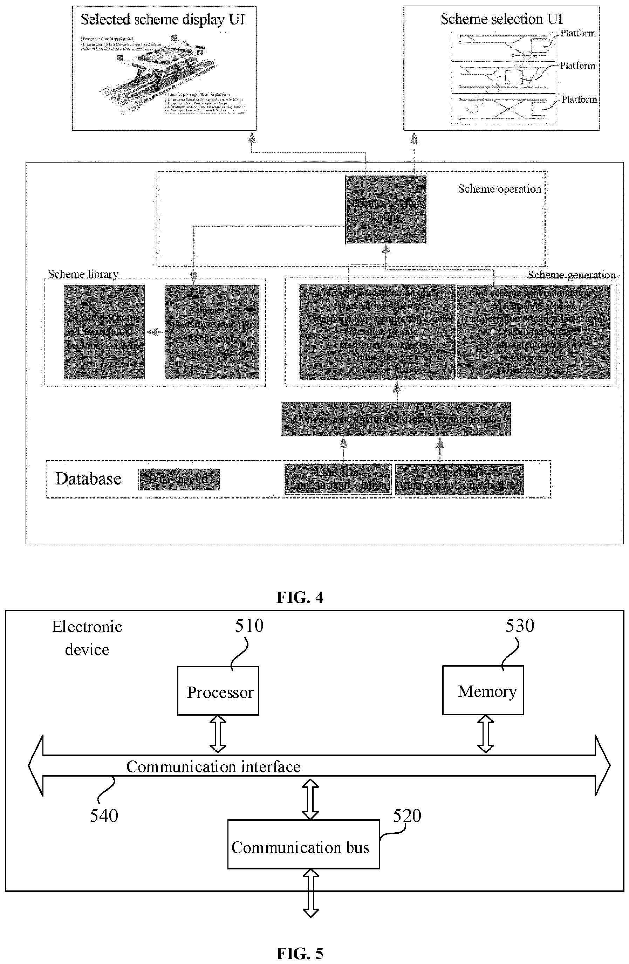

Based on the above-mentioned embodiments, the system for designing an organization scheme of train operation for rail transit further includes a scheme library (not shown), which is used to store the organization scheme of train operation and evaluation indexes. After arranging the scheme library, the relationship between various components in the system for designing an organization scheme of train operation for rail transit is shown in FIG. 4.

The system for designing the organization scheme of train operation for rail transit according to the embodiment of the present disclosure can provide functions of automatically designing and generating the organization scheme of train operation based on relevant data such as lines, passenger flow, and models in terms of built-in design rule library, and evaluate the generated organization scheme of train operation based on evaluation criteria to assist users in making choices. Therefore, a design time of the organization scheme of train operation is significantly reduced and the efficiency is increased.

FIG. 5 is a schematic structural diagram of an electronic device according to an embodiment of the present disclosure. As shown in FIG. 5, the electronic device may include a processor 510, a communication interface 520, a memory 530, and a communication bus 540. The processor 510, the communication interface 520, and the memory 530 communicate with each other through the communication bus 540. The processor 510 can call the logic instructions in the memory 530 to implement the system for designing an organization scheme of train operation for rail transit, and the system includes:
a database storing line data, passenger flow data and model data used for designing the organization scheme of train operation;
a scheme generating device, used to design the organization scheme of train operation based on the line data, the passenger flow data, and the model data according to a preset design rule for the organization scheme of train operation, and obtain evaluation indexes for the organization scheme of train operation; and
an operating device, used to operate the system by a user to select the line data, the passenger flow data, the model data and the preset design rule for the organization scheme of train operation, and store and/or display the organization scheme of train operation and the evaluation indexes.

In addition, the logic instructions in the memory 530 described above may be implemented in the form of a software functional unit and may be stored in a computer readable storage medium while being sold or used as a separate product.

Based on such understanding, the solutions of the present disclosure in essence or a part of the solutions that contributes to the related art, or all or part of the solutions, may be embodied in the form of a software product, which is stored in a storage medium, including several instructions to cause a computer device (which may be a personal computer, server, or network side device, etc.) described in the respective embodiments of the present disclosure. The storage medium described above includes various media that may store program codes such as U disk, mobile hard disk, read-only memory (ROM), random access memory (RAM), magnetic disk, or a compact disk.

An embodiment of the present disclosure provides a computer program product including a computer program stored on a non-transitory computer readable storage medium, the computer program includes program instructions, when executed by a computer, causing the computer to implement the system for designing an organization scheme of train operation for rail transit. The system includes:
a database storing line data, passenger flow data and model data used for designing the organization scheme of train operation;
a scheme generating device, used to design the organization scheme of train operation based on the line data, the passenger flow data, and the model data according to a preset design rule for the organization scheme of train operation, and obtain evaluation indexes for the organization scheme of train operation; and
an operating device, used to operate the system by a user to select the line data, the passenger flow data, the model data and the preset design rule for the organization scheme of train operation, and store and/or display the organization scheme of train operation and the evaluation indexes.

An embodiment of the present disclosure provides a non-transitory computer-readable storage medium on which computer programs are stored. The computer programs, when executed by a processor, cause the processor to implement the system for designing an organization scheme of train operation for rail transit. The system includes:
a database storing line data, passenger flow data and model data used for designing the organization scheme of train operation;
a scheme generating device, used to design the organization scheme of train operation based on the line data, the passenger flow data, and the model data according to a preset design rule for the organization scheme of train operation, and obtain evaluation indexes for the organization scheme of train operation; and
an operating device, used to operate the system by a user to select the line data, the passenger flow data, the model data and the preset design rule for the organization scheme of train operation, and store and/or display the organization scheme of train operation and the evaluation indexes.

The device embodiments described above are merely illustrative, wherein the units described as separate components may or may not be physically separate, and the components displayed as units may or may not be physical units, that is, may be located at the same place or be distributed to multiple network units. Some or all of the modules may be selected according to actual needs to achieve the purpose of the solution of the present embodiment. Those of ordinary skill in the art can understand and implement the embodiments described above without paying creative labors.

Through the description of the embodiments above, those skilled in the art can clearly understand that the various embodiments can be implemented by means of software and a necessary general hardware platform, and of course, by hardware. Based on such understanding, the solutions of the present disclosure in essence or a part of the solutions that contributes to the related art may be embodied in the form of a software product, which is stored in a computer readable storage medium such as ROM/RAM, magnetic discs, optical discs, etc., including several instructions to cause a computer device (which may be a personal computer, server, or network device, etc.) to perform various embodiments described in various embodiments.

Finally, it should be noted that the above embodiments are only used to explain the solutions of the present disclosure, and are not limited thereto; although the present disclosure is described in detail with reference to the foregoing embodiments, it should be understood by those skilled in the art that they can still modify the solutions described in the foregoing embodiments and make equivalent replacements to a part of the features and these modifications and replacements do not depart from the scope of the solutions of the embodiments of the present disclosure.

## Claims

1. A system for designing an organization scheme of train operation for rail transit, comprising:
a database for storing line data, passenger flow data and model data used for designing the organization scheme of train operation;
a scheme generating device, used to design, according to a preset design rule for the organization scheme of train operation, the organization scheme of train operation based on the line data, the passenger flow data, and the model data, and obtain an evaluation index for the organization scheme of train operation; and
an operating device, used to operate the system by a user to select the line data, the passenger flow data, the model data and the preset design rule for the organization scheme of train operation, and store and/or display the organization scheme of train operation and the evaluation indexes.

2. The system of claim 1, wherein
the organization scheme of train operation comprises: a vehicle marshalling scheme, a transportation organization scheme, a train operation routing schemes, and a siding design.

3. The system of claim 1, wherein
the preset design rule for the organization scheme of train operation comprises:
a design rule for the vehicle marshalling scheme, a design rule for the transportation organization scheme, a design rule for the train operation routing schemes, and a design rule for the siding design.

4. The system of claim 3, wherein
the design rule for the vehicle marshalling scheme comprises: selecting a type of a vehicle based on vehicle operation and vehicle depot resource sharing rules according to the passenger flow data and determining marshalling number based on the transportation capacity requirements of a line;
the design rule for the transportation organization scheme comprises: determining stations for running express trains and the number of express and slow train pairs based on the function orientation of the line, a target value of time and the passenger flow data;
the design rule for the train operation routing schemes comprise: constructing train operation routing configuration schemes with different time gradients based on the passenger flow data and a routing design rule; and
the design rule for the siding design comprises: constructing a siding scheme according to siding requirements derived from the train operation routing schemes.

5. The system of claim 2, wherein the evaluation index comprises:
designed transportation capacity, designed transportation capacity reserve and a vehicle purchase cost for the vehicle marshalling scheme;
railway carrying capacity and traffic capacity, an investment amount of a project and a travel time of express and slow trains for the transportation organization scheme;
a peak hour full load rate, a vehicle purchase cost, a routing coverage and designed traffic capacity for the train operation routing schemes; and
operational flexibility and fault handling flexibility for the siding design.

6. The system of claim 5, further comprising a display device,
wherein the display device is used to display the organization scheme of train operation and the evaluation index, and perform weighted rating on the organization scheme of train operation.

7. The system of claim 6, wherein the performing weighted rating on the organization scheme of train operation comprises:
assigning a first weight value to the evaluation index of the vehicle marshalling scheme, assigning a second weight value to the evaluation index of the transportation organization scheme, assigning a third weight value to the evaluation index of the train operation routing schemes, and assigning a fourth weight value to the evaluation index of the siding design; and
performing weighted rating on the organization scheme of train operation based on the first weight value, the second weight value, the third weight value and the fourth weight value.

8. The system of claim 7, wherein a sum of the first weight value, the second weight value, the third weight value and the fourth weight value is 1.

9. The system of any one of claims 1 to 8, further comprising a scheme library,
wherein the scheme library is used to store the organization scheme of train operation and the evaluation index.

10. The system of any one of claims 1 to 8, wherein
the line data comprises the number of stations, the number of turnouts, the number of signal machines, a technical speed, and an operating mileage of the line;
the passenger flow data comprises peak hour section passenger volume and daily passenger volume of the line; and
the model data comprises a calculation model of the evaluation indexes.
